# EUROPÄISCHE PATENTSCHRIFT

(11) **EP 3 209 519 B1**
(45) Veröffentlichungstag und Bekanntmachung des Hinweises auf die Patenterteilung: **29.09.2021**
(21) Anmeldenummer: 15780862.7
(22) Anmeldetag: 14.10.2015
(51) Int. Cl.: B60N 2/08, B60N 2/07

(54) **LÄNGSEINSTELLER FÜR EINEN FAHRZEUGSITZ UND FAHRZEUGSITZ**
LONGITUDINAL ADJUSTER FOR A VEHICLE SEAT AND VEHICLE SEAT
DISPOSITIF DE RÉGLAGE LONGITUDINAL D'UN SIÈGE DE VÉHICULE ET SIÈGE DE VÉHICULE

(30) Priorität: 20.10.2014 DE 102014221229; 10.12.2014 DE 102014225426
(43) Veröffentlichungstag der Anmeldung: 30.08.2017
(73) Patentinhaber: KEIPER Seating Mechanisms Co., Ltd., Shanghai 201315 (CN)
(72) Erfinder: FLICK, Joachim, 42499 Hueckeswagen (DE); SPRENGER, Erik, 42929 Wermelskirchen (DE)
(74) Vertreter: Finger, Catrin
(86) Internationale Anmeldenummer: PCT/EP2015/073785
(87) Internationale Veröffentlichungsnummer: WO 2016/062592

(56) Entgegenhaltungen:
- WO-A1-02/30702
- DE-A1- 3 042 379
- FR-A1- 2 829 974
- FR-A1- 2 886 588
- US-A- 4 712 759

## Beschreibung

Die Erfindung betrifft einen Längseinsteller für einen Fahrzeugsitz. Weiterhin betrifft die Erfindung einen Fahrzeugsitz, umfassend einen solchen Längseinsteller.

Aus der DE 10 2008 056 683 B4 ist ein Längseinsteller bekannt, der zumindest eine Unterschiene und zumindest eine gegenüber der Unterschiene in Längsrichtung verschiebbare Oberschiene sowie zum spielfreien Verriegeln dieser zumindest eine Verriegelungseinheit mit zumindest zwei Verriegelungen zum Verriegeln der Oberschiene gegenüber der Unterschiene umfasst.

In der FR 2 886 588 A1 wird ein Schienenverstellmechanismus für ein Fahrzeug beschrieben, welcher ein Verriegelungssystem mit vier Verriegelungselementen aufweist, die mit zwei verschiedenen Reihen von parallelen Hohlräumen eines feststehenden Schienenabschnitts zusammenwirken. Die Verriegelungselemente werden unabhängig in der Querrichtung verschoben. Die Verriegelungselemente wirken mit den Hohlräumen zusammen, unabhängig von der Position eines beweglichen Schienenabschnitts in Bezug auf den feststehenden Schienenabschnitt. Eine Reihe von Hohlräumen, die auf einer oberen Höhe (7f) angeordnet sind, wirken mit den Zähnen der oberen Verriegelungselemente zusammen. Eine andere Reihe von Hohlräumen, die auf einer unteren Höhe angeordnet sind, wirken mit den Zähnen der unteren Verriegelungselemente zusammen.

Aus der FR 2 829 974 A1 ist ein Fahrzeugsitz mit einem Schienenverstellmechanismus bekannt. Der Sitz umfasst ein Sitzteil, das von zwei Laufschienen getragen wird, die jeweils Abschnitte umfassen, die relativ zueinander in einer Längsrichtung gleiten. Der Abschnitt des ersten Läufers trägt eine erste Klinke, die sich zwischen einer verriegelten und einer entriegelten Position bewegen kann. Eine zweite Klinke, die in dem zweiten Läufer vorgesehen ist, weist Verriegelungsplatten auf.

In der WO 02/30702 A1 wird eine Sitzlängsverstellung beschrieben. Die Sitzlängsverstellung für Kraftfahrzeugsitze umfasst zwei im Abstand voneinander angeordnete Schienen-Paare, die jeweils aus zwei Schienen, einer dem Sitz zugeordneten Oberschiene und einer dem Boden eines Fahrzeuges zugeordneten Unterschiene, aufgebaut sind, und wenigstens einen federbelasteten, bewegbaren, plattenförmigen Verriegelungsteil, der an der Oberschiene gehaltert ist und in einer Verriegelungsstellung eine Bewegung der Oberschiene in der Unterschiene sperrt. Die Unterschiene weist zahnartige Durchbrüche auf. Die Oberschiene ist mit schlitzartigen Öffnungen versehen. Der Verriegelungsteil trägt an seinen beiden gegenüberliegenden Längsseiten zahnartige Vorsprünge. Das eine Ende des Verriegelungsteiles greift an die Oberschiene, während das andere Ende des Verriegelungsteiles an die Unterschiene angreift. Hierbei berührt das Verriegelungsteil mit einem Ende die Unterschiene und mit dem anderen Ende die Oberschiene, wobei jeweils ein Vorsprung in die schlitzartige Öffnung bzw. den zahnartigen Durchbruch eingreift.

Aus der DE 30 42 379 A1 ist eine Feststellvorrichtung für einen längsverstellbar auf Schienen geführten Fahrzeugsitz bekannt. Die Feststellvorrichtung umfasst eine der Bodenschiene zugeordnete, in Schienenrichtung verlaufende und mit einer Reihe gleichabständiger, gleich breiter Rastöffnungen versehene Rastenschiene, ein der anderen Schiene zugeordnetes Sperrelement mit mindestens zwei in die Rastöffnungen einrastbaren und aus ihnen ausrastbaren Sperrzähnen und einen ebenfalls an der anderen Schiene befestigten Scherrahmen, dessen Scherfenster jeweils einen Sperrzahn umgreifen. Die in Schienenrichtung gemessene Breite der Sperrzähne ist kleiner als die lichte Weite der Scherfenster. Die Sperrzähne sind so in Bezug auf ihre Scherfenster angeordnet, dass zwischen den Innenflanken der Sperrzähne und den zugehörigen innenseitigen Rändern der Scherfenster jeweils ein Luftspalt freibleibt, während die Außenflanken der Sperrzähne an den zugeordneten außenseitigen Rändern der jeweiligen Scherfenster anliegen.

In der US 4 712 759 A wird eine Verriegelungsstruktur für eine Sitzverschiebevorrichtung für einen Fahrzeugsitz beschrieben, umfassend eine erste und eine zweite Schiene, die parallel zueinander und gegeneinander verschiebbar und verriegelbar sind, wobei eine unterschiedliche Aufteilung der Verriegelungslöcher und der Verriegelungszähne vorgesehen ist.

Aufgabe der vorliegenden Erfindung ist es, ein gegenüber dem Stand der Technik verbesserten Längseinsteller für einen Fahrzeugsitz und einen verbesserten Fahrzeugsitz anzugeben.

Die Aufgabe wird erfindungsgemäß mit einem Längseinsteller für einen Fahrzeugsitz, mit den Merkmalen des Anspruchs 1 gelöst, wobei der Längseinsteller zumindest eine Unterschiene, zumindest eine gegenüber der Unterschiene in Längsrichtung verschiebbare Oberschiene und zumindest eine Verriegelungseinheit zum Verriegeln der Oberschiene gegenüber der Unterschiene mit zumindest zwei an der Oberschiene angeordneten Verriegelungen umfasst, wobei die Verriegelungen zur Verriegelung von Ober- und Unterschiene derart stufenweise sperrend in die Ober- und Unterschiene eingreifen, dass in einer Vorverriegelungsstufe die Verriegelungselemente die Ober- und Unterschiene mit einem Spiel zueinander vorverriegeln und dass in einer Verriegelungsstufe zumindest eine der Verriegelungen die Ober- und Unterschiene spielfrei (ohne Spiel) miteinander verriegelt.

Die mit der Erfindung erzielten Vorteile bestehen insbesondere darin, dass ein im Stand der Technik üblicher Deformationsweg eines ersten Verriegelungselements, um ein weiteres Verriegelungselement in einen Lastpfad zu verlagern, nicht erforderlich ist.

Eine Ausgestaltung des Längseinstellers sieht ein Betätigungselement zur Ver- oder Entriegelung der Verriegelungseinheit vor, wobei bei Betätigung des Betätigungselements die Verriegelungseinheit aus einer Verriegelungsposition in eine unverriegelte Position bringbar ist und die Verriegelungseinheit nach Verstellung des Fahrzeugsitzes und unbetätigtem Betätigungselement stufenweise von der unverriegelten Position über eine Vorverriegelungsposition in die Verriegelungsposition stellbar ist. Mittels des Betätigungselements ist eine einfache Betätigung der Verriegelungseinheit möglich, wobei bei unbetätigtem Betätigungselement eine sichere Verriegelung der Ober- und Unterschiene in allen Positionen der Verriegelungseinheit sichergestellt ist.

In einer anderen Ausgestaltung des Längseinstellers ist bei unbetätigtem Betätigungselement eine der Verriegelungen in einer Vorverriegelungsposition angeordnet. Somit ist bei unbetätigtem Betätigungselement stets eine Relativbewegung von Ober- und Unterschiene in der Vorverriegelungsposition begrenzt und eine Verstellung des Fahrzeugsitzes nicht mehr über die begrenzte Relativbewegung hinaus ermöglicht. Die begrenzte Bewegung einer der Schienen gegenüber der anderen Schiene führt dann zur Verriegelung beider, indem eine der Verriegelungen dann in die Verriegelungsposition einfällt. Erfindungsgemäß weist eine Verriegelung eine Vielzahl von Rastzähnen

auf und ist derart ausgestaltet, dass einer der Rastzähne breiter als alle anderen Rastzähne ist. Mittels der Rastzähne ist es möglich, eine Verbindung der Verriegelung zumindest mit der Oberschiene herzustellen, wobei der zumindest eine breite Rastzahn zur Kraftübertragung zwischen der ihm zugehörigen Verriegelung und der Unterschiene vorgesehen ist, da lediglich zwischen dem breiten Rastzahn und der Unterschiene eine spielfreie (ohne Spiel) Verbindung hergestellt wird. Bei Vorliegen einer spielfreien Verbindung ist eine Bewegung des breiten Rastzahns in einer zugehörigen Aussparung nicht möglich. Als Spiel wird dementsprechend ein Bewegungsfreiraum zwischen einem Rastzahn und der zugehörigen Aussparung bezeichnet.

Erfindungsgemäß ist die Oberschiene mit einer Anzahl von Aussparungen versehen, welche der Anzahl der Rastzähne der Verriegelungen entspricht. Ein Rastzahn ist genau einer Aussparung zugeordnet. Mittels der die Rastzähne aufnehmenden Aussparungen ist eine permanente Verbindung der Oberschiene mit den Verriegelungen auch während der Sitzverstellung gegeben.

Erfindungsgemäß weist die Oberschiene je Verriegelung in einander gegenüberliegenden Seitenwänden eine Anzahl von Aussparungen auf. Dabei sind die Aussparungen in der einen Seitenwand identisch und die Aussparungen in der gegenüberliegenden Seitenwand unterscheiden sich zumindest in einem Parameter. Somit ist eine Ausbildung der Verriegelung mit unterschiedlich breiten Rastzähnen möglich, wobei die Verriegelung entsprechend auf einer Seite identisch ausgebildete Rastzähne aufweist. Eine andere Ausführungsform des Längseinstellers sieht vor, dass die sich zumindest in einem Parameter unterscheidenden Aussparungen diagonal einander gegenüberliegend in die Oberschiene eingebracht sind. Eine daraus resultierende, in Längsrichtung seitenverkehrte Anordnung der Verriegelungen ist somit möglich, wodurch die Verriegelungen derart anordbar sind, dass diese stets verschiedene Positionen in Verriegelungsrichtung einnehmen.

Erfindungsgemäß ist das jeweilige Verriegelungselement als eine Rastplatte mit an beiden Längskanten in Längsrichtung hintereinander angeordneten Rastzähnen ausgebildet, welche in korrespondierenden Aussparungen der Oberschiene in Verriegelungsrichtung beweglich angeordnet sind. Die Beweglichkeit des Verriegelungselements in Verriegelungsrichtung ermöglicht eine einfache Betätigung desselben, wobei bei der Ausbildung als Rastplatte ein Herstellungs- und Montageaufwand einfach und kostengünstig ist. Die jeweilige Rastplatte ist zweckmäßigerweise im Wesentlichen horizontal ausgerichtet, d. h. ein Normalenvektor der jeweiligen Rastplatte ist zweckmäßigerweise im Wesentlichen parallel zur Verriegelungsrichtung und somit zweckmäßigerweise im Wesentlichen parallel zur Hochachse des Fahrzeugs ausgerichtet. Die Betätigungsrichtung ist die Richtung, in welcher die Verriegelungen oder zumindest deren Zähne zum Verriegeln und Entriegeln im Wesentlichen bewegt werden.

Bei im Wesentlichen hebelförmigen Verriegelungen, welche nicht zur beanspruchten Erfindung gehören, werden diese zweckmäßigerweise derart geschwenkt, dass sich deren Zähne im Wesentlichen nach oben oder nach unten bewegen, um zu verriegeln oder zu entriegeln. Dabei kann diese Auf- und Abbewegung der Zähne bei den hebelförmigen Verriegelungen eine Teilbewegung einer Schwenkbewegung der Zähne aufgrund der Schwenkbewegung der hebelförmigen Verriegelungen sein, d. h. die Zähne schwenken seitlich und nach oben oder in die entgegengesetzte Richtung seitlich und nach unten, um zu verriegeln bzw. zu entriegeln.

In einer weiteren Ausführungsform des Längseinstellers ist das eine Verriegelungselement gegenüber dem anderen Verriegelungselement seitenverkehrt in Längsrichtung benachbart angeordnet. Somit ist es ermöglicht, dass die Verriegelungselemente in Verriegelungsrichtung stets verschiedene Positionen einnehmen. Das ist ebenfalls möglich, wenn die Verriegelungselemente gerade hintereinander angeordnet sind.

Erfindungsgemäß weist die Oberschiene je Verriegelung eine Aussparung auf, welche in Längsrichtung breiter ist als die anderen Aussparungen. Somit ist die eine breitere Aussparung als eine Aufnahme für den breiten Rastzahn ausgebildet und eine Führung desselben in Verriegelungsrichtung sichergestellt. Die bereits beschriebene spielfreie Verbindung des breiten Rastzahns mit der Unterschiene ist nicht eingeschränkt.

Erfindungsgemäß weist die Oberschiene je Verriegelung eine Aussparung auf, welche im Gegensatz zu den anderen Aussparungen konisch ausgebildet ist.

Mittels der konischen Ausbildung der Aussparung nimmt diese in der Verriegelungsposition einen Rastzahn derart auf, dass die Kraftübertragung der Oberschiene auf die Verriegelung ermöglicht ist.

In einer weiteren Ausgestaltung des Längseinstellers ist die Aussparung in Verriegelungsrichtung derart konisch ausgebildet, dass diese einen Rastzahn der zugehörigen Verriegelung derart führt, dass dieser in der Verriegelungsposition ohne ein Spiel oder spielfrei einrastet. Somit sind nur die konisch ausgebildete Aussparung und ein Rastzahn je Verriegelung in kraftübertragendem Eingriff mit der Oberschiene, wobei immer nur eine der beiden Verriegelungen spielfrei einrastet. Die zweite Verriegelung dient nach geringer Verformung aufgrund einer durch eine Kollision wirkenden Kraft dabei nur der Aufnahme der Kollisionslasten.

Erfindungsgemäß weist die Unterschiene eine Vielzahl von in gleichen Abständen beabstandete Ausformungen auf, wobei eine Ausformung zweckmäßigerweise jeweils einen Vorsprung, einen Steg und eine Raste aufweist. Die Ausformungen sind als Aufnahmen für die Rastzähne ausgebildet, wobei der Vorsprung, der Steg und die Raste zweckmäßigerweise in Verriegelungsrichtung unterschiedliche Höhen aufweisen. Sie sind zweckmäßigerweise in Längsrichtung der Unterschiene stufenförmig hintereinander angeordnet. Dabei bildet der Vorsprung in Verriegelungsrichtung, d. h. zweckmäßigerweise in Richtung parallel zu einer Hochachse des Fahrzeugs, die tiefeste Stufe und die Raste die höchste Stufe oder umgekehrt. Ein in die Raste eingefallener oder eingerasteter Rastzahn ist dabei in der Verriegelungsposition und ein auf dem Steg angeordneter Rastzahn ist in der Vorverriegelungsposition angeordnet. Die Ausformungen sind zweckmäßigerweise in gegenüberliegenden Seitenwänden der Unterschiene ausgebildet.

Erfindungsgemäß ist die Raste an ihren Flanken derart konisch ausgebildet, dass nur der breite Rastzahn einer der Verriegelungen ohne ein Spiel einrastet. Dabei rasten die anderen Rastzähne mit Spiel in die Raste ein.

Die Kraftübertragung ist somit ausschließlich mittels des breiten Rastzahns sichergestellt.

Mittels der spielfreien Verbindung des breiten Rastzahns mit der Unterschiene und der spielfreien Verbindung des Rastzahns mit der konischen Aussparung der Oberschiene wird somit eine Kraft nur von der Oberschiene auf den Rastzahn in der konischen Aussparung über den breiten Rastzahn auf die Unterschiene übertragen. Die mit Spiel angeordneten Rastzähne in den anderen Aussparungen der Oberschiene und den Ausformungen in der Unterschiene sind in einem normalen Betrieb des Längseinstellers nicht kraftübertragend. Sie sind ausschließlich für einen Kollisionsfall des Fahrzeugs vorgesehen. Bei der Kollision wirkende Kräfte können zu einer Deformation der spielfrei angeordneten Rastzähne führen, wobei die bis dahin mit Spiel angeordneten Rastzähne aufgrund der Deformation kraftübertragend an die jeweilige Aussparung bzw. Ausformung verlagert werden.

Ein Fahrzeugsitz, umfassend einen solchen Längseinsteller, ist bei unbetätigtem Betätigungselement stets in einem verriegelten Zustand, wobei eine vom Nutzer ungewollte Längsverschiebung des Fahrzeugsitzes in vorteilhafter Weise vermieden wird.

Ausführungsbeispiele der Erfindung werden anhand von Zeichnungen näher erläutert. Dabei zeigen:
- Figur 1: schematisch in Seitenansicht einen Fahrzeugsitz mit einem Längseinsteller,
- Figur 2: schematisch in perspektivischer Darstellung ein Schienenpaar des Längseinstellers,
- Figur 3: schematisch eine teilweise geschnittene, perspektivische Teilansicht des Schienenpaares im Bereich einer Verriegelungseinheit des Längseinstellers, welcher sich in einem vorverriegelten Zustand befindet,
- Figur 4A: schematisch eine teilweise geschnittene, perspektivische Teilansicht des in Figur 3 dargestellten Schienenpaares,
- Figur 4B: schematisch die gegenüberliegende Seite der in Figur 4A dargestellten Teilansicht des Schienenpaares,
- Figur 5: schematisch die in Figur 3 dargestellte Teilansicht des Schienenpaares des Längseinstellers im verriegelten Zustand, wobei ein anderes Verriegelungselement in einer Verriegelungsposition eingerastet ist,
- Figur 6: schematisch einen vertikalen Schnitt des Schienenpaares in der y-z-Ebene,
- Figur 7: schematisch in Seitenansicht einen Ausschnitt einer Rastgeometrie an einer Unterschiene des in Figur 5 dargestellten Schienenpaares,
- Figur 8A: schematisch in Draufsicht einen ersten Lastpfad des Verriegelungselements,
- Figur 8B: schematisch in Draufsicht einen zweiten Lastpfad des Verriegelungselements,
- Figur 9: schematisch eine nicht zur beanspruchten Erfindung gehörende Verriegelungseinheit,
- Figur 10: schematisch Komponenten der in Figur 9 gezeigten Verriegelungseinheit
- Figur 11: schematisch eine teilweise geschnittene, perspektivische Teilansicht der nicht zur beanspruchten Erfindung gehörenden Verriegelungseinheit und
- Figur 12: schematisch in Seitenansicht ein Rastloch einer weiteren Unterschiene, der nicht zur beanspruchten Erfindung gehörenden Verriegelungseinheit.

Einander entsprechende Teile sind in allen Figuren mit den gleichen Bezugszeichen versehen.

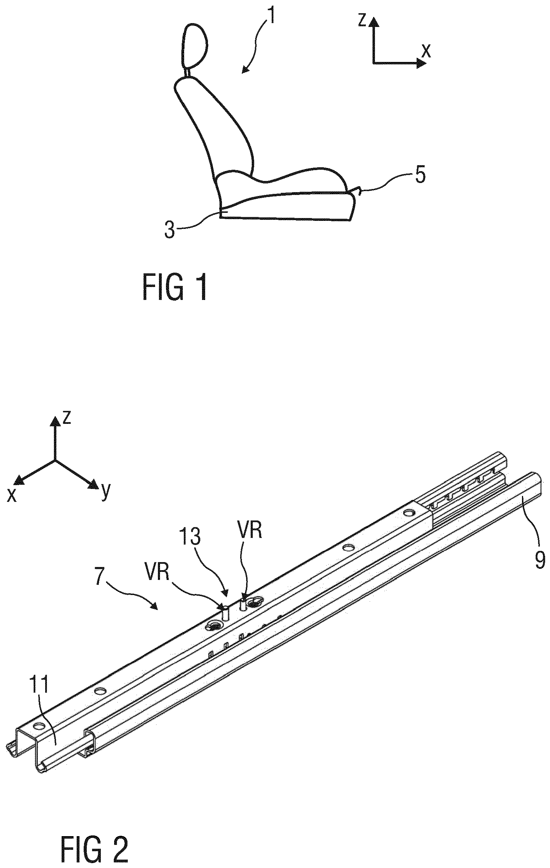

Figur 1 zeigt in einer Seitenansicht einen Fahrzeugsitz 1 eines Fahrzeugs. Der Fahrzeugsitz 1 weist ein mit einem Längseinsteller 3 in Verbindung stehendes Betätigungselement 5 auf, bei dessen Betätigung der Längseinsteller 3 eine Verschiebung des Fahrzeugsitzes 1 entlang einer Längsrichtung x ermöglicht, wobei diese im Wesentlichen parallel zur Fahrtrichtung verläuft. Der Fahrzeugsitz 1 weist in Längsrichtung x auf beiden Fahrzeugsitzseiten jeweils ein in Figur 2 näher dargestelltes Schienenpaar 7 auf.

Figur 2 zeigt in perspektivischer Darstellung eines der Schienenpaare 7 des Längseinstellers 3. Dabei sind beide Schienenpaare 7 analog aufgebaut. Das dargestellte Schienenpaar 7 umfasst eine Unterschiene 9 und eine Oberschiene 11, wobei die Unterschiene 9 mit einer Fahrzeugstruktur des Fahrzeugs verbunden ist und die Oberschiene 11 an der Unterschiene 9 angeordnet ist.

Die Oberschiene 11 ist in Längsrichtung x relativ zur Unterschiene 9 verschiebbar und mittels einer Verriegelungseinheit 13 mit der Unterschiene 9 verriegelbar. Dabei umgreifen sich die Unterschiene 9 und die Oberschiene 11 gegenseitig mit ihren im Wesentlichen U-förmigen Profilen mit nach innen bzw. nach außen gebogenen Längsrändern.

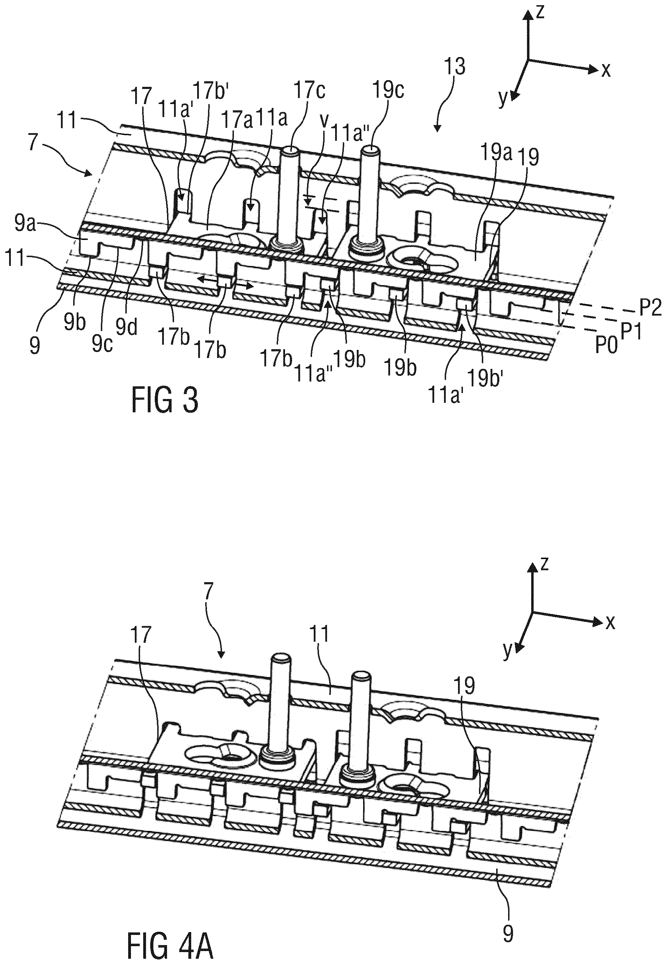

Figur 3 zeigt eine teilweise geschnittene, perspektivische Teilansicht des Schienenpaares 7 im Bereich der Verriegelungseinheit 13 in einem vorverriegelten Zustand.

Zum stufenweise Verriegeln - Vorverriegeln und Verriegeln - von Unterschiene 9 und Oberschiene 11 weist die Verriegelungseinheit 13 zwei Verriegelungselemente 17, 19 auf. Die Verriegelungselemente 17, 19 sind in Längsrichtung x hintereinander angeordnet und in Aufbau und Funktionsweise identisch, wobei das eine Verriegelungselement 17 gegenüber dem weiteren Verriegelungselement 19 in einer Einbaulage um eine Achse der Verriegelungsrichtung z um 180° gedreht angeordnet ist.

Die Verriegelungseinheit 13 umfasst zumindest die zwei Verriegelungselemente 17, 19. Die Anzahl der Verriegelungselemente 17, 19 und deren Anordnung kann aber auch variieren, d. h. mindestens zwei oder mehr als zwei.

Zur Längsverstellung des Fahrzeugsitzes 1 wird das Betätigungselement 5 betätigt, wodurch der Längseinsteller 3 entriegelt wird, indem die Verriegelungseinheit 13 aus einer Verriegelungsposition P2 in eine unverriegelte Position P0 gebracht wird und nach Verstellung des Fahrzeugsitzes 1 und unbetätigtem Betätigungselement 5 stufenweise von der unverriegelten Position P0 über die dargestellte Vorverriegelungsposition P1 in die Verriegelungsposition P2 gestellt wird oder, bei entsprechender Stellung der Unterschiene 9 und der Oberschiene 11 zueinander, direkt von der unverriegelten Position P0 in die Verriegelungsposition P2 gebracht wird.

Nach Verstellung des Fahrzeugsitzes 1 und Loslassen des Betätigungselements 5 werden die beiden Verriegelungselemente 17, 19 im dargestellten Beispiel aus der unverriegelten Position P0 der Verriegelungseinheit 13 derart gestellt, dass eines der Verriegelungselemente 17, 19, nämlich das Verriegelungselement 19, die Vorverriegelungsposition P1 mit einem Spiel einnimmt, und das andere Verriegelungselement 17 noch in der unverriegelten Position P0 verbleibt. Hierdurch ist in der Vorverriegelung der Verriegelungseinheit 13 eine Bewegung der Oberschiene 11 relativ zur Unterschiene 9 in beide Richtungen begrenzt möglich, bevor die Ober- und Unterschiene 11, 9 zueinander gesperrt werden. In anderen Beispielen kann, bei entsprechender Stellung der Unterschiene 9 und der Oberschiene 11 zueinander, auch eines der Verriegelungselemente 17, 19 die Vorverriegelungsposition P1 einnehmen und das andere Verriegelungselement 17, 19 direkt die Verriegelungsposition P2 einnehmen.

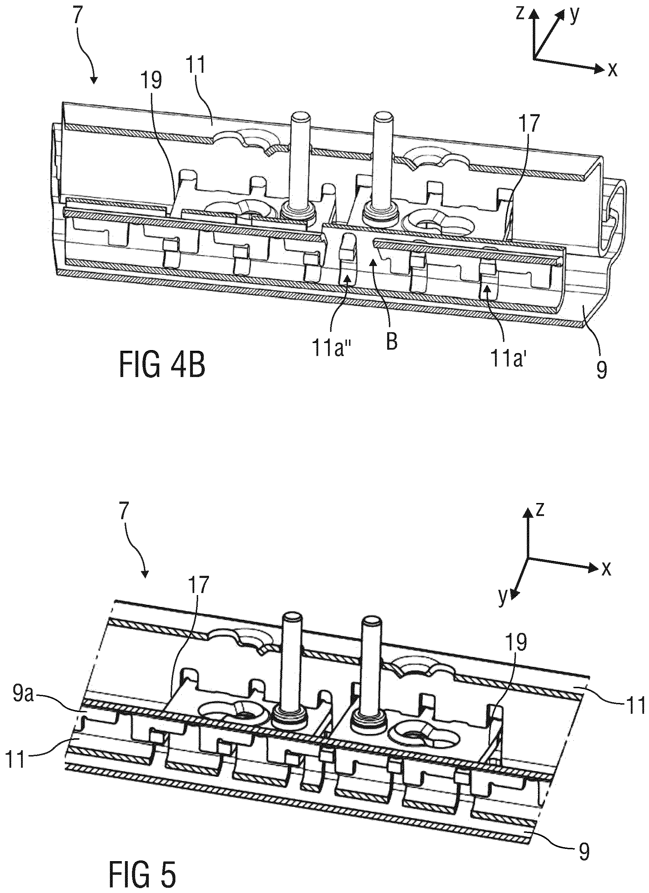

Im dargestellten Beispiel ist aus der Vorverriegelung der Verriegelungseinheit 13 heraus dann durch weitere Bewegung des Fahrzeugsitzes 1 in Längsrichtung x nach vorne oder hinten sichergestellt, dass eines der Verriegelungselemente 17, 19 sicher in die Verriegelungsposition P2 fällt bzw. einrastet, wie in Figuren 4A oder 5 dargestellt, wobei in diesem Ausführungsbeispiel in Figur 4A die Situation nach der Bewegung des Fahrzeugsitzes 1 nach hinten, d. h. entgegen der Fahrtrichtung, und in Figur 5 die Situation nach der Bewegung des Fahrzeugsitzes 1 nach vorn, d. h. in Fahrtrichtung und somit in Längsrichtung x dargestellt ist.

Somit ist eine stufenweise Verriegelung des Längseinstellers 3 ermöglicht, wobei in den jeweiligen Verriegelungsstufen - Vorverriegelung oder Verriegelung - nur eines der Verriegelungselemente 17, 19 in der jeweiligen Stufe, der Vorverriegelungsposition P1 bzw. der Verriegelungsposition P2 steht. Der Längseinsteller 3 ist jedoch derart ausgebildet, dass alle Verriegelungselemente 17, 19, im dargestellten Beispiel die beiden Verriegelungselemente 17, 19 sowohl die Vorverriegelungsposition P1 als auch die Verriegelungsposition P2 einnehmen können, wobei es jeweils abhängig von der Ausrichtung der Oberschiene 11 und der Unterschiene 9 zueinander ist, ob sich das jeweilige Verriegelungselemente 17, 19 in der Vorverriegelungsposition P1 oder in der Verriegelungsposition P2 befindet.

Dabei sind verschiedene Verriegelungsstufungen möglich:
- Verriegelungsbewegung eines der Verriegelungselemente 17, 19 von der unverriegelten Position P0 direkt in die Verriegelungsposition P2;
- Verriegelungsbewegung eines der Verriegelungselemente 17, 19 von der unverriegelten Position P0 über die Vorverriegelungsposition P1 in die Verriegelungsposition P2 oder
- Verriegelungsbewegung eines der Verriegelungselemente 17, 19 von der unverriegelten Position P0 in die Vorverriegelungsposition P1.

Dabei befinden sich die beiden Verriegelungselemente 17, 19 stets in unterschiedlichen Verriegelungsstufen und nicht in ein- und derselben Stufe.

Figur 3 zeigt das eine Verriegelungselement 17 in der unverriegelten Position P0 und das weitere Verriegelungselement 19 in der Vorverriegelungsposition P1, so dass die Verriegelungseinheit 13 vorverriegelt ist. Das heißt, die Oberschiene 11 und die Unterschiene 9 sind begrenzt zueinander verstellbar.

Da die Verriegelungselemente 17, 19 einen identischen Aufbau aufweisen, wird im Folgenden eine detaillierte Beschreibung dieser lediglich anhand von dem Verriegelungselement 17 vorgenommen, wobei die Unterschiene 9 und/oder die Oberschiene 11 betreffende Strukturmerkmale identisch für das Verriegelungselement 19 an der Unterschiene 9 bzw. der Oberschiene 11 ausgebildet sind.

Das Verriegelungselement 17 weist einen Grundkörper 17a auf, welcher plattenförmig als eine Rastplatte ausgebildet ist. Längsseitig weist der Grundkörper 17a eine Anzahl von abstehenden Rastzähnen 17b auf, von denen im dargestellten Beispiel zumindest einer - der Rastzahn 17b' - eine andere Abmessung aufweist als die übrigen Rastzähne 17b.

Im gezeigten Ausführungsbeispiel weist der Rastzahn 17b' eine größere Breite auf als die übrigen Rastzähne 17b. Im Weiteren wird der Rastzahn 17b' als breiterer Rastzahn 17b' bezeichnet. Der breitere Rastzahn 17b' ist insbesondere ein in Längsrichtung x gesehen äußerer Zahn der Rastplatte.

An den Längskanten des Grundkörpers 17a im gezeigten Ausführungsbeispiel sind fünf Rastzähne 17b und der breitere Rastzahn 17b' ausgebildet. Die in Längsrichtung x äußere Position des breiteren Rastzahnes 17b' ist insbesondere in Fahrtrichtig nach hinten und benachbart zu diesem zwei Rastzähne 17b in Fahrtrichtung nach vorne ausgebildet. Gegenüberliegend sind an der rechten Längskante drei identische Rastzähne 17b ausgebildet.

Das Verriegelungselement 19 weist analog zum Aufbau des Verriegelungselements 17 einen Grundkörper 19a und Rastzähne 19b, 19b' auf.

Mit anderen Worten: Beide Verriegelungselemente 17, 19 weisen auf einer Längsseite eine Anzahl von identischen Rastzähnen 17b, 19b auf und auf der gegenüberliegenden Längsseite eine korrespondierende Anzahl von Rastzähnen 17b, 19b auf, wobei in diesem Beispiel einer dieser Rastzähne 17b', 19b' breiter und alle anderen Rastzähne 17b, 19b identisch ausgebildet sind.

Die Anzahl der Rastzähne 17b kann variieren, wobei diese beidseitig an einer Längskante des Grundkörpers 17a ausgebildet sind.

Die beiden Verriegelungselemente 17, 19 sind in der Oberschiene 11 gehalten. Hierzu weist die Oberschiene 11 korrespondierende Abmessungen und Formen auf.

Insbesondere weist die Oberschiene 11 eine der Anzahl der Rastzähne 17b, 19b entsprechende Anzahl von Aussparungen 11a bis 11a" auf. Die der Längsseite der Rastplatte mit den identischen Rastzähnen 17b, 19b gegenüberliegende Flanke oder Seite der Oberschiene 11 weist korrespondierend ausgebildete und identische Aussparungen 11a auf, in welche die identischen Rastzähne 17b, 19b mit Spiel (Toleranz) eingreifen. Auf der gegenüberliegenden Flanke oder Seite der Oberschiene 11, die in diesem Beispiel der Längsseite der Rastplatte mit unterschiedlichen Rastzähnen 17b, 17b', 19b, 19b' gegenüberliegt, weist die Oberschiene 11 korrespondierend zu den in diesem Beispiel unterschiedlichen Rastzähnen 17b, 17b', 19b, 19b' unterschiedlich ausgebildete Aussparungen 11a bis 11a" auf. Sind in anderen Beispielen alle Rastzähne 17b, 17b', 19b, 19b' gleich ausgebildet, so gilt dies zweckmäßigerweise auch für die Aussparungen 11a bis 11a".

Im Detail weist die Oberschiene 11 in Fahrtrichtung rechts drei die Rastzähne 17b führende Aussparungen 11a auf, welche derart ausgebildet sind, dass die Rastzähne 17b in Verriegelungsrichtung z beweglich sind.

In Fahrtrichtung links weist die Oberschiene 11 in diesem Beispiel hinten eine den breiteren Rastzahn 17b' führende Aussparung 11a' auf, welche in Längsrichtung x breiter ist als die in Fahrtrichtung vorn benachbarte Aussparung 11a. Eine in Fahrtrichtung linke, vordere Aussparung 11a" ist in diesem Beispiel im Gegensatz zur Aussparung 11a in Verriegelungsrichtung z am geschlossenen Verriegelungsende konisch ausgebildet und führt den Rastzahn 17b derart, dass dieser in der Verriegelungsposition P2 ohne ein Spiel (in die Aussparung 11a") einrastet und somit die Oberschiene 11 lediglich mittels des Eingriffs des Rastzahnes 17b in der Aussparung 11a" ohne Spiel verriegelt ist. Somit wird in einem Fahrbetrieb eine auf die Oberschiene 11 wirkende Kraft ausschließlich von dem Rastzahn 17b in der Aussparung 11a" auf das Verriegelungselement 17 übertragen.

Ein vertikaler Versatz V zwischen den Aussparungen 11a, 11a', 11a" des einen Verriegelungselements 17 und den Aussparungen 11a des weiteren Verriegelungselements 19 ist vorgesehen, um eine Montage der Verriegelungselemente 17, 19 in der Oberschiene 11 zu erleichtern.

Die Unterschiene 9 weist eine Vielzahl von Ausformungen 9a auf, wobei jede Ausformung 9a einen Vorsprung 9b, einen Steg 9c und eine Raste 9d aufweist. Vorzugsweise weist die Unterschiene 9 die Ausformungen 9a über die gesamte Längsausdehnung verteilt und voneinander in gleichen Abständen beabstandet auf.

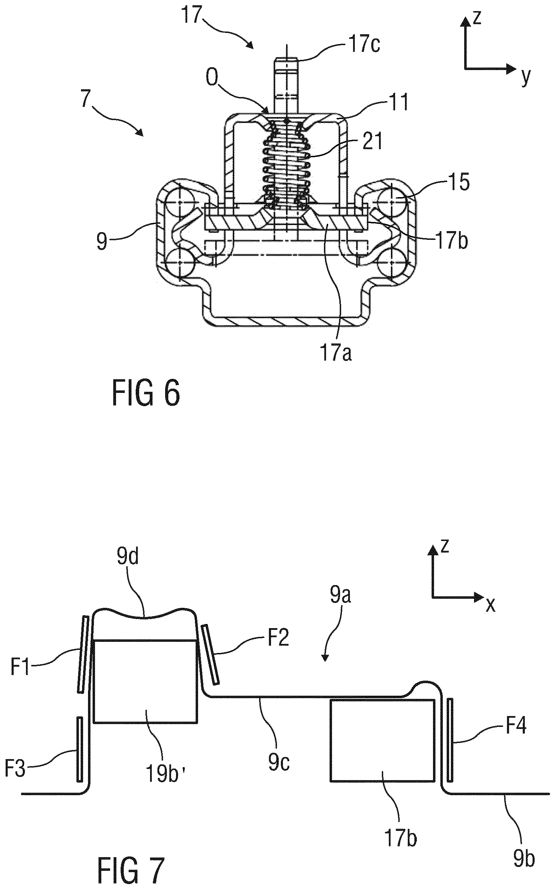

Die Raste 9d ist in diesem Beispiel an ihren in Figur 7 näher dargestellten Flanken F1, F2 derart konisch ausgebildet, dass der jeweilige Rastzahn 17b mit Spiel und der breite Rastzahn 19b' ohne Spiel in die Raste 9d einrasten.

Somit wird die Kraft von dem Verriegelungselement 19 auf die Unterschiene 9 ausschließlich von dem breiten Rastzahn 19b' in der Raste 9d übertragen. Die verbleibenden Rastzähne 17b sind im Fahrbetrieb nicht in einem kraftübertragenden Eingriff mit den Schienen 9, 11. Überschreitet die Kraft einen vorgegebenen Grenzwert, werden die beiden kraftübertragenden Rastzähne 19b, 19b' deformiert. Aufgrund dieser Deformation verringert sich das Spiel zwischen den weiteren Rastzähnen 19b und den Aussparungen 11a, 11a', bis diese einen Kontakt aufweisen. Somit übertragen die weiteren Rastzähne 19b die Kraft auf das Verriegelungselement 19 und wirken in einer Crashsituation unterstützend.

Die zumindest zwei Verriegelungselemente 17, 19 sind derart angeordnet, dass beim Loslassen des Betätigungselements 5 beide Verriegelungselemente 17, 19 stets in verschiedenen Positionen der Verriegelung (P0, P1, P2) in Eingriff mit den Schienen 9, 11 sind.

In der unverriegelten Position P0 liegen die Rastzähne 17b, 17b' auf einem zugehörigen Vorsprung 9b der Unterschiene 9 auf. Eine Bewegung des Fahrzeugsitzes 1 ist entlang der Längsrichtung x in beide Richtungen möglich.

In der Vorverriegelungsposition P1 wurde der Fahrzeugsitz 1 gegenüber der unverriegelten Position P0 weiter in Fahrtrichtung verschoben. Die Rastzähne 17b, 17b' liegen auf dem jeweiligen Steg 9c auf und schlagen an den jeweiligen Vorsprüngen 9b an, welche lediglich eine weitere Bewegung in Fahrtrichtung erlauben. Diese Vorverriegelung verhindert somit eine Bewegung des Fahrzeugsitzes 1 entgegen der Fahrtrichtung.

In der Vorverriegelungsposition P1 oder auch einer ersten Stufe einer Verriegelung des Längseinstellers 3 erfolgt eine Sicherheitsverriegelung, die eine Lastaufnahmefähigkeit in beide Lastrichtungen der Längsrichtung x unmittelbar nach Loslassen des Betätigungselements 5 sicherstellt. Diese erste Stufe der Verriegelung hat Spiel und somit auch keine geneigten Flanken F3, F4 (senkrechte Flanken oder Anschläge), die ein Öffnen aufgrund einer Crashlast bzw. Crashimpulsen begünstigen würden. D. h. die dritte Flanke F3 und/oder die vierte Flanke F4 sind nicht derart geneigt wie die erste Flanke F1 und/oder die zweite Flanke F2. Die erste Stufe der Verriegelung oder Lastaufnahmestufe ist somit frei von Einflüssen einer Toleranzkette. In einer weiteren Ausführungsform kann/können die dritte Flanke F3 und/oder die vierte Flanke F4, insbesondere die dritte Flanke F3, gering geneigt sein, beispielsweise mit einem Winkel von 0° bis 6°, insbesondere 0° bis 3°, insbesondere 3°.

In der Verriegelungsposition P2 wurde der Fahrzeugsitz 1 gegenüber der Vorverriegelungsposition P1 weiter in Fahrtrichtung verschoben, wodurch die Rastzähne 17b, 17b' rastend in die zugehörige Raste 9d eingreifen. Die Rastzähne 17b, 17b' sind in die jeweilige Raste 9d eingerastet, wobei hier nur der breite Rastzahn 17b' ohne Spiel in die zugehörige Raste 9d einrastet.

Vom Grundkörper 17a, 19a dringt ein Führungsstift 17c, 19c in Verriegelungsrichtung z nach oben durch eine Öffnung O1 in der Oberschiene 11 durch. Eine Öffnung O2 dient als eine Aufnahme für eine in Figur 6 näher dargestellte Zugfeder 21, welche das

Verriegelungselement 17, 19 in die Verriegelungsrichtung z vorspannt. Die Öffnung O1 weist einen größeren Durchmesser auf als der Durchmesser des Führungsstiftes 17c, 19c. Die Zugfeder 21 wird an dem als Rastplatte ausgebildetem Verriegelungselement 17, 19 und der Oberschiene 11 eingehängt, wobei die Zugfeder 21 keinen Kontakt zu dem Führungsstift 17c, 19c aufweist.

Bei einer maximalen Krafteinwirkung mittels des Betätigungselements 5 auf die Führungsstifte 17c, 19c werden die Verriegelungselemente 17, 19 derart in Verriegelungsrichtung z nach unten gedrückt, dass ein Kontakt mit der Unterschiene 9 unterbrochen wird und somit die Verschiebung der Oberschiene 11 gegenüber der Unterschiene 9 durchführbar ist.

Beim Loslassen des Betätigungselements 5 übt dieses keine weitere Kraft auf die Führungsstifte 17c, 19c der Verriegelungselemente 17, 19 aus, welche aufgrund der Vorspannung der jeweiligen Zugfeder 21 in die Verriegelungsrichtung z nach oben gezogen werden.

Alternativ sind in nicht dargestellten Ausführungsformen einer sogenannten "PEL"-Verriegelung zwei und mehr Verriegelungselemente 17, 19 möglich. Üblicherweise kommen zwei bis fünf Verriegelungselemente zum Einsatz (mit PEL = permanent engaged locking).

Figur 4A zeigt eine teilweise geschnittene, perspektivische Teilansicht des in Figur 3 dargestellten Schienenpaares 7, wobei das Verriegelungselement 17 in der Verriegelungsposition P2 eingerastet ist. Die Oberschiene 11 aus dem in Figur 3 dargestellten Schienenpaar 7 wurde nach links verschoben. Das Verriegelungselement 17 ist in der Verriegelungsposition P2 eingerastet und das weitere Verriegelungselement 19 befindet sich in der Vorverriegelungsposition P1. Die Verschiebung wird durch das Einfallen der Rastzähne 17b, 17b' in die zugehörigen Rasten 9d und ein Anschlagen der Rastzähne 19b an dem jeweiligen Vorsprung 9b begrenzt, wobei die Oberschiene 11 und die Unterschiene 9 ohne Spiel verriegelt sind. Das Verriegelungselement 17 ist mittels des Rastzahnes 17b' aufgrund der in Figur 7 dargestellten Rastgeometrie der Rasten 9d spielfrei (= ohne Spiel) angeordnet.

Figur 4B zeigt die gegenüberliegende Seite der in Figur 4A dargestellten Teilansicht des Schienenpaares 7. Zusätzlich zur in Figur 4A gezeigten Darstellung ist die Unterschiene 9 in einem Bereich B unterbrochen dargestellt, wobei die konische Ausformung am Verriegelungsende der Aussparung 11a" erkennbar ist.

Figur 5 zeigt ein weiteres Ausführungsbeispiel des in Figur 3 dargestellten Schienenpaares 7, wobei das weitere Verriegelungselement 19 in der Verriegelungsposition P2 eingerastet ist. Die Oberschiene 11 wurde aus dem in Figur 3 dargestellten ersten Zustand nach rechts verschoben. Die Verschiebung wird, anders als in Figur 4A, durch das Einfallen der Rastzähne 19b, 19b' des Verriegelungselements 19 in die jeweilige Raste 9d begrenzt und anschließend durch den rastenden Eingriff verhindert. Die Rastzähne 17b des anderen Verriegelungselements 17 kommen zwar bei der Verlagerung der Oberschiene 11 in Eingriff mit dem jeweiligen Steg 9c, übertragen aber in diese Richtung keine Kraft.

Figur 6 zeigt einen vertikalen Schnitt eines möglichen Ausführungsbeispiels in der y-z-Ebene. Zwischen der Unterschiene 9 und der Oberschiene 11 sind Kugeln 15 zur gegenseitigen Führung der Schienen 9, 11 angeordnet, so dass eine Reibung zwischen denselben verringert ist.

Die Verbindungselemente 17, 19 weisen eine jeweilige Zugfeder 21 auf, wobei im hier gezeigten Schnitt lediglich das Verriegelungselement 17 dargestellt ist. Die Verriegelungselemente 17, 19 sind in Verriegelungsrichtung z in der Oberschiene 11 angeordnet. Die Zugfeder 21 ist einerseits an dem zugeordneten Verriegelungselement 17, 19 und andererseits an der Oberschiene 11 angeordnet und spannt das Verriegelungselement 17, 19 in der Verriegelungsrichtung z vor.

Figur 7 zeigt in Seitenansicht einen Ausschnitt einer Rastgeometrie an der Unterschiene 9 des in Figur 3 dargestellten Schienenpaares 7 anhand der in Figur 5 gezeigten Darstellung in einem Übergangsbereich der Verriegelungselemente 17, 19. Der Rastzahn 19b ist in der Raste 9d eingefallen und somit in der Verriegelungsposition P2. Der Rastzahn 17b ist am Steg 9c angeordnet und somit in der Vorverriegelungsposition P1.

Die der Raste 9d zugehörige erste Flanke F1 weist eine sehr geringe Neigung mit einem Winkel beispielsweise von 0° bis 6°, insbesondere 3°, auf, wobei eine Auslegung auf besonders hohe Crashsicherheit und geringen Toleranzausgleich möglich ist.

Die der Raste 9d zugehörige zweite Flanke F2 weist eine im Vergleich zur Flanke F1 etwas größere Neigung von beispielsweise 3° bis 10°, insbesondere 6°, auf. Hierdurch ist die Auslegung auf Fahrbetriebslasten und ein großer Toleranzausgleich erzielt und ein Außereingriffkommen der Verriegelungsposition P2 bei Crashimpulsen kann nicht ganz ausgeschlossen werden. Crashlasten in diese Richtung werden nach geringer Verschiebung vom dargestellten Rastzahn 17b des Verriegelungselements 17, insbesondere bei Anlage des Rastzahns 17b an der Flanke F4, in der Vorverriegelungsposition P1 übernommen.

Die Flanken F3, F4 sind so genannte Lastaufnahmeflanken für die Vorverriegelungsstufe und nehmen bei hohen Impulsen die resultierende Kraft auf, bevor sich die Verriegelungsposition P2 einstellt. Sie sind daher in einer Ausführungsform nicht geneigt und somit als senkrechte Flanken oder Anschläge ausgebildet. In einer weiteren Ausführunsform kann/können die dritte Flanke F3 und/oder die vierte Flanke F4, insbesondere die dritte Flanke F3, gering geneigt sein, beispielsweise mit einem Winkel von 0° bis 6°, insbesondere 0° bis 3°, insbesondere 3°.

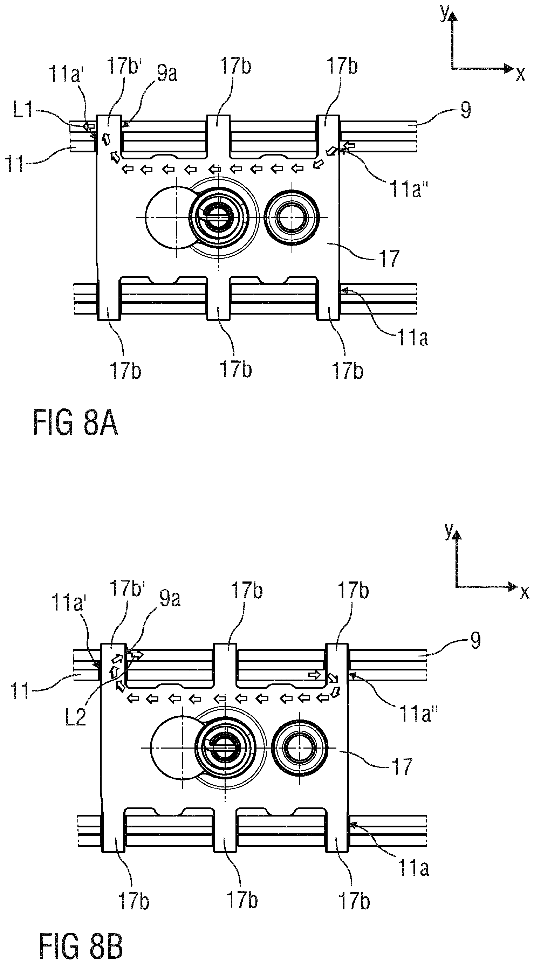

Figur 8A zeigt einen ersten Lastpfad L1 eines Verriegelungselements 17, welches zwei Rastzähne 17b und einen Rastzahn 17b' aufweist. Die in Längsrichtung x rechtsseitigen Rastzähne 17b und der linksseitig mittlere Rastzahn 17b sind in den Aussparungen 11a eingerastet. Der in Längsrichtung x linksseitige, fahrzeugfrontseitige Rastzahn 17b ist in die konische Aussparung 11a" eingerastet und der heckseitige Rastzahn 17b' ist in die breitere Aussparung 11a' und gleichzeitig in die Raste 9d eingerastet. Die Kraft wird somit lediglich von der Oberschiene 11 auf den Rastzahn 17b in der konischen Aussparung 11a" über den breiten Rastzahn 17b' auf die Unterschiene 9 übertragen.

Figur 8B zeigt einen zweiten Lastpfad L2 des in Figur 8A dargestellten Verriegelungselements 17, wobei die Oberschiene 11 nach rechts verlagert wird. Die Kraft wird von der Oberschiene 11 auf den Rastzahn 17b in der konischen Aussparung 11a" über den breiten Rastzahn 17b' auf die Unterschiene 9 übertragen.

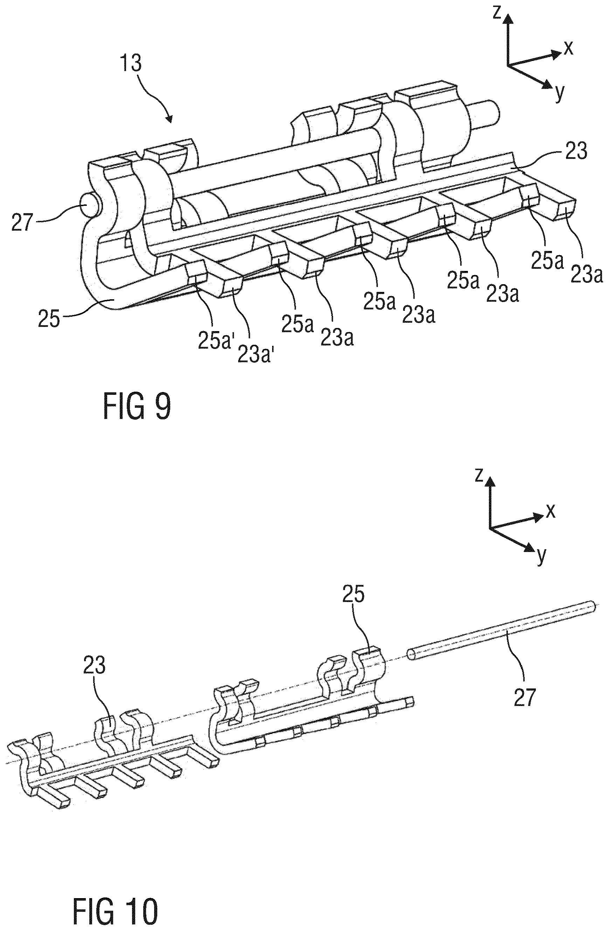

Die Figuren 9 bis 11 zeigen eine nicht zur beanspruchten Erfindung gehörende Verriegelungseinheit 13 in verschiedenen Ansichten.

Die Verriegelungseinheit 13 umfasst Verriegelungselemente 23, 25, welche derart gekröpft ausgebildet sind, dass diese mittels einer Verriegelungsstange 27 in Längsrichtung x beweglich um dieselbe anordbar sind. Eine Schiene 29, insbesondere eine Unterschiene 9, weist eine Vielzahl von Rastlöchern 31 auf, in welche die Verriegelungselemente 23, 25 eingreifen und ein Verriegeln der Schiene 29 ermöglichen. In dieser Ausführungsform können die Verriegelungselemente 23, 25 ineinander geschachtelt werden, um eine Gesamtlänge der Verriegelungseinheit 13 zu verringern.

Die Verriegelungselemente 23, 25 sind hebelförmig ausgebildet. An dem Verriegelungselement 23 sind an der rechten Längskante vier Rastzähne 23a in Fahrtrichtung vorne hintereinander in gleichen Abständen angeordnet. Ein Rastzahn 23a' ist in Fahrtrichtung hinten benachbart zu einem Rastzahn 23a angeordnet. Der Rastzahn 23a' ist in Längsrichtung x breiter ausgebildet als die anderen Rastzähne 23a.

An dem Verriegelungselement 25 sind an der rechten Längskante vier Rastzähne 25a in Fahrtrichtung vorne hintereinander in gleichen Abständen angeordnet. Ein Rastzahn 25a' ist in Fahrtrichtung hinten benachbart zu einem Rastzahn 25a angeordnet. Der Rastzahn 25a' ist in Längsrichtung x breiter ausgebildet als die anderen Rastzähne 25a.

Die Rastzähne 23a, 25a der Verriegelungselemente 23, 25 sind identisch ausgebildet und die Rastzähne 23a', 25a' der Verriegelungselemente 23, 25 sind identisch ausgebildet.

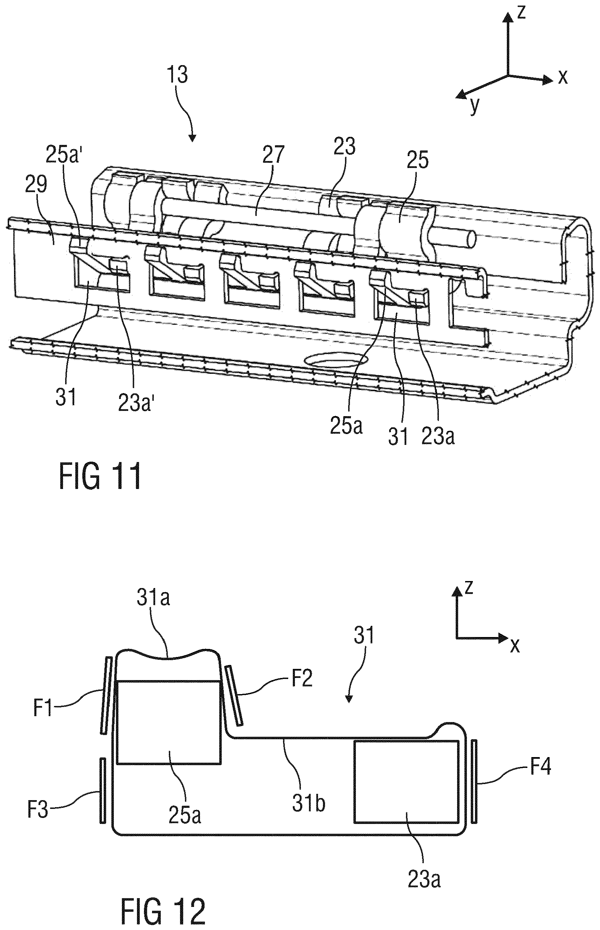

Figur 12 zeigt in Seitenansicht das Rastloch 31 der Schiene 29. Das Rastloch 31 ist L-förmig ausgebildet und weist eine Raste 31a auf, deren Flanken F1, F2 derart konisch ausgebildet sind, dass der Rastzahn 25a mit einem Spiel einrastet. Der Rastzahn 23a liegt auf einem Steg 31b auf, wobei dieser somit in der Vorverriegelungsposition P1 angeordnet ist.

Eine in diesem Ausführungsbeispiel nicht dargestellte Oberschiene weist eine Anzahl von die Rastzähne 23a, 23a', 25a, 25a' aufnehmende Ausformungen auf, sodass eine Kraft von Oberschiene auf Unterschiene übertragbar ist.

### Bezugszeichenliste

- 1: Fahrzeugsitz
- 3: Längseinsteller
- 5: Betätigungselement
- 7: Schienenpaar
- 9: Unterschiene
- 9a: Ausformungen
- 9b: Vorsprung
- 9c: Steg
- 9d: Raste
- 11: Oberschiene
- 11a: Aussparung
- 11a': Aussparung (breit)
- 11a": Aussparung (konisch)
- 13: Verriegelungseinheit
- 15: Kugel
- 17: Verriegelungselement (plattenförmig)
- 17a: Grundkörper
- 17b: Rastzahn
- 17b': Rastzahn (breit)
- 17c: Führungsstift
- 19: Verriegelungselement (plattenförmig)
- 19a: Grundkörper
- 19b: Rastzahn
- 19b': Rastzahn (breit)
- 19c: Führungsstift
- 21: Zugfeder
- 23: Verriegelungselement (hebelförmig)
- 23a: Rastzahn
- 23a': Rastzahn (breit)
- 25: Verriegelungselement (hebelförmig)
- 25a: Rastzahn
- 25a': Rastzahn (breit)
- 27: Verriegelungsstange
- 29: Schiene
- 31: Rastloch
- 31a: Steg
- 31b: Raste

- B: Bereich
- F1: Flanke
- F2: Flanke
- F3: Flanke
- F4: Flanke
- L1: Lastpfad
- L2: Lastpfad
- O1: Öffnung
- O2: Öffnung
- P0: unverriegelte Position
- P1: Vorverriegelungsposition
- P2: Verriegelungsposition
- V: Versatz
- VR: Verriegelung
- x: Längsrichtung
- z: Verriegelungsrichtung
- y: Querrichtung

## Patentansprüche

1. Längseinsteller (3) für einen Fahrzeugsitz (1) mit
- zumindest einer Unterschiene (9),
- zumindest einer gegenüber der Unterschiene (9) in Längsrichtung (x) verschiebbaren Oberschiene (11) und
- zumindest einer Verriegelungseinheit (13) zum Verriegeln der Oberschiene (11) gegenüber der Unterschiene (9),
wobei
die Verriegelungseinheit (13) zumindest zwei Verriegelungen (VR) umfasst, welche zum Verriegeln von der Oberschiene (11) und der Unterschiene (9) derart stufenweise sperrend in dieselben eingreifen, dass
- in einer Vorverriegelungsstufe zumindest eine der Verriegelungen (VR) die Oberschiene (11) und die Unterschiene (9) mit einem Spiel zueinander vorverriegelt und
- in einer Verriegelungsstufe zumindest eine der Verriegelungen (VR) die Oberschiene (11) und die Unterschiene (9) spielfrei miteinander verriegelt,
**dadurch gekennzeichnet, dass**
- eine Verriegelung (VR) eine Vielzahl von Rastzähnen (17b, 17b', 19b, 19b') aufweist und derart ausgestaltet ist, dass einer der Rastzähne (17b', 19b') breiter als alle anderen Rastzähne (17b, 19b) ist,
- die Unterschiene (9) eine Vielzahl von in gleichen Abständen beabstandete Ausformungen (9a) aufweist, wobei eine Ausformung (9a) jeweils einen Vorsprung (9b), einen Steg (9c) und eine Raste (9d) aufweist,
- die Raste (9d) an ihren Flanken (F1, F2) derart konisch ausgebildet ist, dass nur der breite Rastzahn (17b', 19b') einer der Verriegelungen (VR) ohne ein Spiel einrastet,
- die Oberschiene (11) mit einer Anzahl von Aussparungen (11a, 11a', 11a") versehen ist, welche der Anzahl der Rastzähne (17b, 17b', 19b, 19b') der Verriegelungen (VR) entspricht,
- die Oberschiene (11) je Verriegelung (VR) in einander gegenüberliegenden Seitenwänden eine Anzahl von Aussparungen (11a, 11a', 11a") aufweist, wobei die Aussparungen (11a) in der einen Seitenwand identisch sind und die Aussparungen (11a, 11a', 11a") in der gegenüberliegenden Seitenwand sich zumindest in einem Parameter unterscheiden,
- das Verriegelungselement (17, 19) als eine Rastplatte mit an beiden Längskanten in Längsrichtung (x) hintereinander angeordneten Rastzähnen (17b, 17b', 19b, 19b') ausgebildet ist, welche in korrespondierenden Aussparungen (11a, 11a', 11a") der Oberschiene (11) in Verriegelungsrichtung (z) beweglich angeordnet sind,
- die Oberschiene (11) je Verriegelung (VR) eine Aussparung (11a') aufweist, welche in Längsrichtung (x) breiter ist als die anderen Aussparungen (11a, 11a") und als eine Aufnahme für den breiten Rastzahn (17b', 19b') ausgebildet ist, und
- die Oberschiene (11) je Verriegelung (VR) eine Aussparung (11a") aufweist, welche im Gegensatz zu den anderen Aussparungen (11a, 11a') konisch ausgebildet ist.

2. Längseinsteller (3) nach Anspruch 1,
**dadurch gekennzeichnet, dass** ein Betätigungselement (5) zur Ver- oder Entriegelung der Verriegelungseinheit (13) vorgesehen ist, wobei bei Betätigung des Betätigungselements (5) die Verriegelungseinheit (13) aus einer Verriegelungsposition (P2) in eine unverriegelte Position (P0) bringbar ist und die Verriegelungseinheit (13) nach Verstellung des Fahrzeugsitzes (1) und unbetätigtem Betätigungselement (5) stufenweise von der unverriegelten Position (P0) über eine Vorverriegelungsposition (P1) in die Verriegelungsposition (P2) stellbar ist, wobei bei unbetätigtem Betätigungselement (5) eine der Verriegelungen (VR) in einer Vorverriegelungsposition (P1) angeordnet ist.

3. Längseinsteller (3) nach einem der vorhergehenden Ansprüche,
**dadurch gekennzeichnet, dass** die sich zumindest in einem Parameter unterscheidenden Aussparungen (11a, 11a', 11a") diagonal einander gegenüberliegend in die Oberschiene (11) eingebracht sind.

4. Längseinsteller (3) nach einem der vorhergehenden Ansprüche,
**dadurch gekennzeichnet, dass** die konische Aussparung (11a") in Verriegelungsrichtung (z) derart konisch ausgebildet ist, dass diese einen Rastzahn (17b, 19b) der zugehörigen Verriegelung (VR) derart führt, dass dieser in der Verriegelungsposition (P2) ohne ein Spiel einrastet.

5. Fahrzeugsitz (1), umfassend einen Längseinsteller (3) nach einem der vorhergehenden Ansprüche.

## Claims

1. Longitudinal adjuster (3) for a vehicle seat (1), having
- at least one lower rail (9),
- at least one upper rail (11) which is displaceable in a longitudinal direction (x) with respect to the lower rail (9), and
- at least one locking unit (13) for locking the upper rail (11) with respect to the lower rail (9),
wherein
the locking unit (13) comprises at least two locking mechanisms (VR) which, in order to lock the upper rail (11) and the lower rail (9), engage therein in a stepwise locking manner such that
- in a pre-locking step, at least one of the locking mechanisms (VR) pre-locks the upper rail (11) and the lower rail (9) to one another with play, and
- in a locking step, at least one of the locking mechanisms (VR) locks the upper rail (11) and the lower rail (9) to one another in a play-free manner,
**characterized in that**
- one locking mechanism (VR) has a multiplicity of latching teeth (17b, 17b', 19b, 19b') and is configured such that one of the latching teeth (17b', 19b') is wider than all of the other latching teeth (17b, 19b),
- the lower rail (9) has a multiplicity of formations (9a) spaced apart at equal distances, wherein each formation (9a) has a protrusion (9b), a web (9c) and a catch (9d),
- the catch (9d) is configured in a conical manner at its flanks (F1, F2) such that only the wide latching tooth (17b', 19b') of one of the locking mechanisms (VR) latches without play,
- the upper rail (11) is provided with a number of recesses (11a, 11a', 11a") which corresponds to the number of latching teeth (17b, 17b', 19b, 19b') of the locking mechanisms (VR),
- the upper rail (11) has a number of recesses (11a, 11a', 11a'') in mutually opposite side walls per locking mechanism (VR), wherein the recesses (11a) in one side wall are identical and the recesses (11a, 11a', 11a") in the opposite side wall differ at least in one parameter,
- the locking element (17, 19) is configured as a latching plate with latching teeth (17b, 17b', 19b, 19b') which are arranged one behind another in the longitudinal direction (x) on both longitudinal edges and are arranged so as to be movable in the locking direction (z) in corresponding recesses (11a, 11a', 11a'') of the upper rail (11),
- the upper rail (11) has, per locking mechanism (VR), at least one recess (11a') that is wider in the longitudinal direction (x) than the other recesses (11a, 11a'') and is configured as a receptacle for the wide latching tooth (17b', 19b'), and
- the upper rail (11) has, per locking mechanism (VR), a recess (11a'') which, in contrast to the other recesses (11a, 11a') is configured in a conical manner.

2. Longitudinal adjuster (3) according to claim 1, **characterized in that** an actuating element (5) for locking or unlocking the locking unit (13) is provided, wherein, when the actuating element (5) is actuated, the locking unit (13) is able to be brought from a locking position (P2) into an unlocked position (P0), and, after adjustment of the vehicle seat (1) and with the actuating element (5) unactuated, the locking unit (13) is adjustable in a stepwise manner from the unlocked position (P0) via a pre-locking position (P1) into the locking position (P2), wherein, when the actuating element (5) is unactuated, one of the locking mechanisms (VR) is arranged in a pre-locking position (P1).

3. Longitudinal adjuster (3) according to one of the preceding claims, **characterized in that** the recesses (11a, 11a', 11a'') that differ at least in one parameter have been introduced into the upper rail (11) in a manner located diagonally opposite one another.

4. Longitudinal adjuster (3) according to one of the preceding claims, **characterized in that** the conical recess (11a'') is configured in a conical manner in the locking direction (z) such that said recess guides a latching tooth (17b, 19b) of the associated locking mechanism (VR) such that said latching tooth latches in the locking position (P2) without play.

5. Vehicle seat (1) comprising a longitudinal adjuster (3) according to one of the preceding claims.

## Revendications

1. Dispositif de réglage longitudinal (3) pour un siège de véhicule (1), comportant
- au moins un rail inférieur (9),
- au moins un rail supérieur (11) déplaçable dans la direction longitudinale (x) par rapport au rail inférieur (9) et
- au moins une unité de verrouillage (13) servant au verrouillage du rail supérieur (11) par rapport au rail inférieur (9),
l'unité de verrouillage (13) comportant au moins deux mécanismes de verrouillage (VR), lesquels, pour le verrouillage du rail supérieur (11) et du rail inférieur (9), viennent graduellement en prise dans ceux-ci de manière bloquante, de telle sorte que
- dans une étape de pré-verrouillage, au moins l'un des mécanismes de verrouillage (VR) pré-verrouille le rail supérieur (11) et le rail inférieur (9) l'un par rapport à l'autre avec jeu et
- dans une étape de verrouillage, au moins l'un des mécanismes de verrouillage (VR) verrouille le rail supérieur (11) et le rail inférieur (9) l'un avec l'autre sans jeu,
**caractérisé en ce que**
- un mécanisme de verrouillage (VR) comprend une pluralité de dents d'encliquetage (17b, 17b', 19b, 19b') et est configuré de telle sorte que l'une des dents d'encliquetage (17b', 19b') est plus large que toutes les autres dents d'encliquetage (17b, 19b),
- le rail inférieur (9) comprend une pluralité de formations (9a) espacées à des distances identiques, une formation (9a) comprenant respectivement une saillie (9b), une nervure (9c) et un cran (9d),
- le cran (9d) est réalisé de manière conique au niveau de ses flancs (F1, F2) de telle sorte que seulement la dent d'encliquetage large (17b', 19b') de l'un des mécanismes de verrouillage (VR) s'encliquète sans jeu,
- le rail supérieur (11) est doté d'un nombre d'évidements (11a, 11a', 11a"), lequel correspond au nombre de dents d'encliquetage (17b, 17b', 19b, 19b') des mécanismes de verrouillage (VR),
- le rail supérieur (11) comprend pour chaque mécanisme de verrouillage (VR) un nombre d'évidements (11a, 11a', 11a") dans des parois latérales opposées l'une à l'autre, les évidements (11a) étant identiques dans l'une des parois latérales et les évidements (11a, 11a', 11a") dans la paroi latérale opposée différant au moins de par un paramètre,
- l'élément de verrouillage (17, 19) est réalisé sous la forme d'une plaque d'encliquetage dotée de dents d'encliquetage (17b, 17b', 19b, 19b') disposées les unes derrière les autres dans la direction longitudinale (x) au niveau des deux bords longitudinaux, lesquelles dents sont disposées de manière mobile dans la direction de verrouillage (z) dans des évidements correspondants (11a, 11a', 11a") du rail supérieur (11),
- le rail supérieur (11) comprend pour chaque mécanisme de verrouillage (VR) un évidement (11a'), lequel est plus large que les autres évidements (11a, 11a'') dans la direction longitudinale (x) et est réalisé sous la forme d'un logement pour la dent d'encliquetage large (17b', 19b'), et
- le rail supérieur (11) comprend pour chaque mécanisme de verrouillage (VR) un évidement (11a"), lequel est réalisé de manière conique contrairement aux autres évidements (11a, 11a').

2. Dispositif de réglage longitudinal (3) selon la revendication 1, **caractérisé en ce qu'**un élément d'actionnement (5) pour le verrouillage ou le déverrouillage de l'unité de verrouillage (13) est prévu, l'unité de verrouillage (13) pouvant être amenée d'une position de verrouillage (P2) à une position non verrouillée (P0) lors de l'actionnement de l'élément d'actionnement (5) et, après le réglage du siège de véhicule (1) et avec l'élément d'actionnement (5) non actionné, l'unité de verrouillage (13) pouvant être réglée graduellement à partir de la position non verrouillée (P0), via une position de pré-verrouillage (P1), jusqu'à la position de verrouillage (P2), l'un des mécanismes de verrouillage (VR) étant disposé dans une position de pré-verrouillage (P1) lorsque l'élément d'actionnement (5) n'est pas actionné.

3. Dispositif de réglage longitudinal (3) selon l'une des revendications précédentes, **caractérisé en ce que** les évidements (11a, 11a', 11a") différant au moins de par un paramètre sont ménagés de manière opposée diagonalement les uns aux autres dans le rail supérieur (11) .

4. Dispositif de réglage longitudinal (3) selon l'une des revendications précédentes, **caractérisé en ce que** l'évidement conique (11a") est réalisé de manière conique dans la direction de verrouillage (z) de telle sorte que celui-ci guide une dent d'encliquetage (17b, 19b) du mécanisme de verrouillage (VR) associé de telle sorte que celle-ci s'encliquète sans jeu dans la position de verrouillage (P2).

5. Siège de véhicule (1), comportant un dispositif de réglage longitudinal (3) selon l'une des revendications précédentes.
